# EUROPEAN PATENT APPLICATION

(11) **EP 4 576 018 A1**
(43) Date of publication of application: **25.06.2025**
(21) Application number: 23864498.3
(22) Date of filing: 31.07.2023
(51) Int. Cl.: G06V 20/00

(54) **IMAGE PROCESSING METHOD AND APPARATUS**

(30) Priority: 14.09.2022 CN 202211115044
(71) Applicant: Huawei Technologies Co., Ltd., Shenzhen, Guangdong 518129 (CN)
(72) Inventor: QIU, Jueqin, Shenzhen, Guangdong 518129 (CN); WEN, Ming, Shenzhen, Guangdong 518129 (CN)
(74) Representative: Maiwald GmbH
(86) International application number: PCT/CN2023/110156
(87) International publication number: WO 2024/055764

(57) **Abstract**

Embodiments of this application provide an image processing method and apparatus. The method includes: generating corresponding ISP parameters based on raw images captured by a camera in different scenarios; and performing image processing on different raw images based on different ISP parameters, to obtain processed images. In this way, the ISP parameters are dynamically adjusted, to perform, based on the different ISP parameters, image processing on the raw images captured in the different scenarios, so as to improve image processing accuracy, and implement adaptive image enhancement for the different scenarios.

## Description

This application claims priority to Chinese Patent Application No. 202211115044.X, filed with the China National Intellectual Property Administration on September 14, 2022 and entitled "IMAGE PROCESSING METHOD AND APPARATUS", which is incorporated herein by reference in its entirety.

### TECHNICAL FIELD

Embodiments of this application relate to the field of image processing, and in particular, to an image processing method and apparatus.

### BACKGROUND

Currently, with continuous development of image processing technologies, application scenarios of the image processing technologies are increasingly wide. For example, a terminal device may perform image processing on an image captured by a camera, and apply an image processing result to a scenario such as self-driving or security surveillance.

In an image processing method in conventional technologies, a firmware (Firmware, FW) part of an image signal processor (image signal processor, ISP) performs, based on a fixed algorithm parameter, image processing on an image captured by a camera, to obtain a processed image. However, the image processing method based on the fixed algorithm parameter is simple and is not applicable to all scenarios.

### SUMMARY

Embodiments of this application provide an image processing method and apparatus. In the method, the apparatus may generate, based on raw images obtained in different scenarios, ISP parameters that satisfy a corresponding scenario, to dynamically adjust the ISP parameters, so as to perform adaptive image enhancement for the different scenarios.

According to a first aspect, an embodiment of this application provides an image processing method. The method includes: An apparatus obtains a first raw image captured by a camera in a first scenario. The apparatus obtains a first ISP parameter based on the first raw image. The apparatus performs, based on the first ISP parameter, image processing on the first raw image captured by the camera, to obtain a first image. The apparatus outputs the first image to a target application, to enable the target application to perform image task processing on the first image. The apparatus obtains a second raw image captured by the camera in a second scenario. The apparatus obtains a second ISP parameter based on the second raw image. The apparatus performs, based on the second ISP parameter, image processing on the second raw image captured by the camera, to obtain a second image. The apparatus outputs the second image to the target application, to enable the target application to perform image task processing on the second image. In this way, in this embodiment of this application, ISP parameters that satisfy different scenario requirements can be obtained, so that the ISP parameters are dynamically adjusted, to perform, based on different ISP parameters, image processing on raw images captured in different scenarios, so as to improve image processing accuracy, and implement adaptive image enhancement for the different scenarios.

For example, in this embodiment of this application, the ISP parameter is automatically obtained. To be specific, a corresponding ISP parameter may be predicted based on the raw images obtained in the different scenarios.

For example, the apparatus may periodically obtain the ISP parameter, to reduce computing pressure of the apparatus.

For example, the target application may be a perception application or a display application. This is not limited in this application.

For example, different target applications perform different image task processing. For example, an image processing task of a CV perception application may include but is not limited to 2D/3D target detection, lane line detection, and scenario semantic segmentation. This is not limited in this application.

In a possible implementation, image content of the first raw image is different from that of the second raw image, and/or an image attribute of the first raw image is different from that of the second raw image. In this embodiment of this application, images photographed in the different scenarios have different content and/or attributes. In this application, corresponding ISP parameters may be predicted based on different raw images, to obtain a better image processing result, so as to adapt to different scenario requirements.

In a possible implementation, the first ISP parameter and the second ISP parameter are used for adjusting at least one of the following image attributes of an image: brightness, a color, noise, sharpness, and contrast. In this way, in this embodiment of this application, different ISP parameters may be used for adjusting different image attributes, to achieve better image effects.

In a possible implementation, the image attributes of the first image and the second image satisfy an image task requirement of the target application. In this application, the image processing is intended to satisfy a requirement of the target application, so that the target application can better recognize an image obtained through the processing, to improve accuracy of image recognition (or another image processing procedure) of the target application.

In a possible implementation, the obtaining a first ISP parameter based on the first raw image includes: inputting the first raw image to an ISP parameter prediction model to obtain the first ISP parameter that is predicted by the ISP parameter prediction model based on the first raw image. The obtaining a second ISP parameter based on the second raw image includes: inputting the second raw image to the ISP parameter prediction model to obtain the second ISP parameter that is predicted by the ISP parameter prediction model based on the second raw image. In this way, in this embodiment of this application, a pre-trained ISP parameter prediction model can automatically predict the ISP parameters based on the raw images in the different scenarios, to generate the ISP parameters that satisfy the different scenario requirements.

In a possible implementation, the ISP parameter prediction model runs on a neural-network processing unit NPU. In this way, in this embodiment of this application, running of the prediction model occupies general computing power of the NPU, and only a small computing amount is needed. In addition, in this application, the prediction model can be deployed on an edge device, and a high-priority task on an AI processor is not occupied.

In a possible implementation, before the obtaining a first raw image captured by a camera in a first scenario, the method further includes: obtaining the ISP parameter prediction model from a cloud. In this way, in this embodiment of this application, in this solution, a product in circulation in the market can be supported in an over-the-air download update manner (that is, obtained from the cloud and installed) to satisfy a compatibility requirement, provided that for the apparatus, an ISP system of a chip on sale supports dynamic refreshing and writing of a parameter.

In a possible implementation, the performing image processing on the first raw image based on the first ISP parameter, to obtain a first image includes: replacing an ISP parameter currently stored in an ISP internal memory with the first ISP parameter, to enable an ISP to obtain the first ISP parameter from the ISP internal memory, and performing image processing on the first raw image based on the first ISP parameter, to output the first image. The performing image processing on the second raw image based on the second ISP parameter, to obtain a second image includes: replacing the first ISP parameter currently stored in the ISP internal memory with the second ISP parameter, to enable the ISP to obtain the second ISP parameter from the ISP internal memory, and performing image processing on the second raw image based on the second ISP parameter, to output the second image. In this way, in this embodiment of this application, a conventional ISP processing algorithm is still used for an image finally, so that controllability and explainability of an entire processing process can be ensured.

According to a second aspect, an embodiment of this application provides a model training method. The method includes: inputting N raw images to an image signal processor ISP parameter prediction model to obtain N ISP parameters that are output by the ISP parameter prediction model, where a weight of the ISP parameter prediction model is a first weight, the N ISP parameters are obtained by the ISP parameter prediction model based on the first weight, and N is an integer greater than 1; inputting the N ISP parameters and the N raw images to a proxy model to obtain N images that are output by the proxy model; inputting the N images to a target application to obtain an image task processing result that is output by the target application; and if the image task processing result does not satisfy a preset condition, adjusting the weight of the ISP parameter prediction model to a second weight, and starting the procedure again from the step of inputting N raw images to an ISP parameter prediction model, until the image task processing result that is output by the target application satisfies the preset condition. In this way, a proxy network can implement a function of an ISP, and implement an end-to-end cyclic training procedure between the ISP parameter prediction model and the target application through joint training of a differentiable proxy network and an FW parameter prediction network.

For example, the model training method may be performed on a computing node.

In a possible implementation, the preset condition includes: a difference value between a preset truth label of the N raw images and a truth label included in the image task processing result of the target application is less than a preset threshold. In this way, in this embodiment of this application, whether the image output by the proxy network satisfies an image task requirement of the target application may be determined based on a difference between the truth label of the raw image and the label output by the target application, to further determine the ISP used by the proxy network, to be specific, whether an ISP parameter predicted by the ISP parameter prediction model satisfies a requirement.

In a possible implementation, before the inputting N raw images to an ISP parameter prediction model, the method further includes: inputting M raw images and M ISP parameters to an ISP to obtain M images that are output by the image processor, where the M raw images are in one-to-one correspondence with the M ISP parameters, and M is an integer greater than 1; inputting the M raw images and the M ISP parameters to the proxy model to obtain M images that are output by the proxy model, where a current weight of the proxy model is a third weight; and if a similarity between the M images that are output by the proxy model and the M images that are output by the image processor is less than a threshold, adjusting the weight of the proxy model to a fourth weight, and starting the procedure again from the step of inputting M raw images and M ISP parameters to an ISP, until the similarity between the M images that are output by the proxy model and the M images that are output by the image processor is greater than the threshold. In this way, the proxy network is trained, so that a processing result of the proxy network may approximate or be the same as a processing result of the ISP, and the proxy network implements a function of the ISP in a joint training process.

According to a third aspect, an embodiment of this application provides an image processing apparatus. The apparatus includes an ISP parameter prediction module and an ISP module. The ISP parameter prediction module is configured to obtain a first raw image captured by a camera in a first scenario. The ISP parameter prediction module is further configured to obtain a first image signal processor ISP parameter based on the first raw image. The image processing ISP module is configured to perform image processing on the first raw image based on the first ISP parameter, to obtain a first image. The ISP module is further configured to output the first image to a target application, to enable the target application to perform image task processing on the first image. The ISP parameter prediction module is further configured to obtain a second raw image captured by the camera in a second scenario. The ISP parameter prediction module is further configured to obtain a second ISP parameter based on the second raw image. The ISP module is further configured to perform image processing on the second raw image based on the second ISP parameter, to obtain a second image. The ISP module is further configured to output the second image to the target application, to enable the target application to perform image task processing on the second image.

In a possible implementation, image content of the first raw image is different from that of the second raw image, and/or an image attribute of the first raw image is different from that of the second raw image.

In a possible implementation, the first ISP parameter and the second ISP parameter are used for adjusting at least one of the following image attributes of an image: brightness, a color, noise, sharpness, and contrast.

In a possible implementation, the image attributes of the first image and the second image satisfy an image task requirement of the target application.

In a possible implementation, the ISP parameter prediction module is configured to replace an ISP parameter currently stored in an ISP internal memory with the first ISP parameter. The ISP module is configured to: obtain the first ISP parameter from the ISP internal memory, and perform image processing on the first raw image based on the first ISP parameter, to output the first image. The ISP parameter prediction module is configured to replace the first ISP parameter currently stored in the ISP internal memory with the second ISP parameter. The ISP module is configured to: obtain the second ISP parameter from the ISP internal memory, and perform image processing on the second raw image based on the second ISP parameter, to output the second image.

According to a fourth aspect, an embodiment of this application provides a model training system. The model training system includes an image signal processor ISP parameter prediction model, a proxy model, and a target application. The system inputs N raw images to the ISP parameter prediction model to obtain N ISP parameters that are output by the ISP parameter prediction model, where a weight of the ISP parameter prediction model is a first weight, the N ISP parameters are obtained by the ISP parameter prediction model based on the first weight, and N is an integer greater than 1. The system inputs the N ISP parameters and the N raw images to the proxy model to obtain N images that are output by the proxy model. The system inputs the N images to the target application. If the N images do not satisfy an image task requirement of the target application, the system adjusts the weight of the ISP parameter prediction model to a second weight, and the procedure is started again from the step of inputting N raw images to the ISP parameter prediction model, until the N images that are output by the proxy model satisfy the image task requirement of the target application.

In a possible implementation, the system further includes an ISP. Before the N raw images are input to the ISP parameter prediction model, M raw images and M ISP parameters are input to the ISP to obtain M images that are output by the image processor, where the M raw images are in one-to-one correspondence with the M ISP parameters, and M is an integer greater than 1; the M raw images and the M ISP parameters are input to the proxy model to obtain M images that are output by the proxy model, where a current weight of the proxy model is a third weight; and if a similarity between the M images that are output by the proxy model and the M images that are output by the image processor is less than a threshold, the weight of the proxy model is adjusted to a fourth weight, where the fourth weight is different from the third weight, and the procedure is started again from the step of inputting M raw images and M ISP parameters to the image processor to obtain M images that are output by the image processor, until the similarity between the M images that are output by the proxy model and the M images that are output by the image processor is greater than the threshold.

According to a fifth aspect, an embodiment of this application provides an electronic device. The electronic device includes one or more processors, a memory, and one or more computer programs. The one or more computer programs are stored in the memory, and when the computer program is executed by the one or more processors, the electronic device is enabled to perform the method of instructions of the method according to any one of the first aspect or the possible implementations of the first aspect.

According to a sixth aspect, an embodiment of this application provides a camera module. The camera module includes one or more processors, a memory, and one or more computer programs. The one or more computer programs are stored in the memory, and when the computer program is executed by the one or more processors, the camera module is enabled to perform the method of instructions of the method according to any one of the first aspect or the possible implementations of the first aspect.

According to a seventh aspect, an embodiment of this application provides a computer-readable medium. The computer-readable medium is configured to store a computer program, and the computer program includes instructions for performing the method according to any one of the first aspect or the possible implementations of the first aspect.

According to an eighth aspect, an embodiment of this application provides a computer program. The computer program includes instructions for performing the method according to any one of the first aspect or the possible implementation of the first aspect.

According to a ninth aspect, an embodiment of this application provides a chip. The chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal and a transmit pin to send a signal.

### BRIEF DESCRIPTION OF DRAWINGS

FIG. 1 is a diagram of a hardware structure of an electronic device;
FIG. 2 is a diagram of a hardware structure of an electronic device;
FIG. 3 is a schematic flowchart of an example of an image processing method;
FIG. 4 is a schematic flowchart of an example of an image processing method;
FIG. 5 is a schematic flowchart of an example of an image processing method;
FIG. 6 is a diagram of an example of a structure of a proxy network;
FIG. 7 is a schematic flowchart of an example of proxy network training;
FIG. 8 is a schematic flowchart of an example of FW parameter prediction network training;
FIG. 9 is a diagram of an example of a system structure of FW parameter prediction network training;
FIG. 10 is a schematic flowchart of an example of image processing; and
FIG. 11 is a diagram of an example of a structure of an apparatus.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and represents that three relationships may exist. For example, A and/or B may represent the following three cases: Only A exists, both A and B exist, and only B exists.

In the specification and claims in embodiments of this application, the terms "first", "second", and the like are used for distinguishing between different objects but do not indicate a particular order of the objects. For example, a first target object, a second target object, and the like are used for distinguishing between different target objects, but are not used for describing a specific order of the target objects.

In embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the terms such as "example" or "for example" is intended to present a relative concept in a specific manner.

In descriptions of embodiments of this application, unless otherwise stated, "plurality of" means two or more. For example, a plurality of processing units mean two or more processing units, and a plurality of systems mean two or more systems.

An image processing method in embodiments of this application is applied to an electronic device. The electronic device may be a mobile phone, a tablet computer, a vehicle-mounted device, a security device, a computer, a wearable device, a smart home device, or the like. This is not limited in this application.

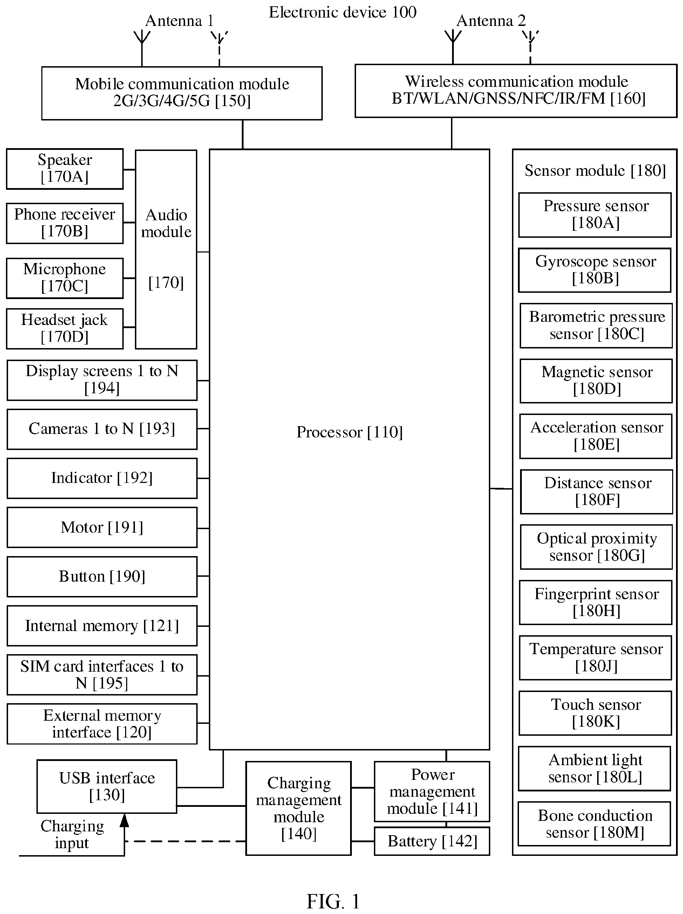

FIG. 1 is a diagram of a structure of an electronic device 100. It should be understood that the electronic device 100 shown in FIG. 1 is merely an example of the electronic device, and the electronic device 100 may have more or fewer components than those shown in the figure, two or more components may be combined, or different component configurations may be used. Various components shown in FIG. 1 may be implemented in hardware, software, or a combination of hardware and software that includes one or more signal processors and/or application-specific integrated circuits. It should be noted that, in this embodiment of this application, an example in which the electronic device is a mobile phone is merely used for description. In another embodiment, the electronic device may be any device described above. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components or may be integrated into one or more processors.

The controller may be a nerve center and a command center of the electronic device 100. The controller may generate an operation control signal based on instruction operation code and a time sequence signal, to control instruction fetching and instruction execution.

The processor 110 may be further provided with a memory, and the memory is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated accessing and reduces wait time for the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call via a Bluetooth headset.

The PCM interface may alternatively be used for audio communication, and sample, quantize, and encode an analog signal. In some embodiments, the audio module 170 may be coupled to the wireless communication module 160 through the PCM interface. In some embodiments, the audio module 170 may alternatively transmit an audio signal to the wireless communication module 160 through the PCM interface, to implement a function of answering a call via a Bluetooth headset. Both the I2S interface and the PCM interface may be used for audio communication.

The UART interface is a universal serial data bus and is used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music via a Bluetooth headset.

The MIPI interface may be configured to connect the processor 110 to a peripheral component, for example, the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display screen 194 through the DSI interface, to implement a display function of the electronic device 100.

The GPIO interface may be configured by software. The GPIO interface may be configured as a control signal interface or a data signal interface. In some embodiments, the GPIO interface may be configured to connect the processor 110 to the camera 193, the display screen 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to be connected to a charger to charge the electronic device 100, or may be configured to transmit data between the electronic device 100 and a peripheral device, or may be configured to be connected to a headset for playing audio via the headset. The interface may be further configured to be connected to another electronic device, for example, an AR device.

It may be understood that an interface connection relationship between modules illustrated in this embodiment of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to be connected to the battery 142, the charging management module 140, and the processor 110. The power management module 141 receives an input from the battery 142 and/or the charging management module 140, to supply power to the processor 110, the internal memory 121, an external memory, the display screen 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used together with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the phone receiver 170B, or the like), or displays an image or a video through the display screen 194. In some embodiments, the modem processor may be an independent component. In some other embodiments, the modem processor may be independent of the processor 110, and the modem processor and the mobile communication module 150 or another functional module are disposed in a same component.

The wireless communication module 160 may provide a solution applied to the electronic device 100 for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert an amplified signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display screen 194, the application processor, and the like. The GPU is a microprocessor for image processing, and is connected to the display screen 194 and the application processor. The GPU is configured to perform mathematical and geometric calculations for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N display screens 194, where N is a positive integer greater than 1.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is turned on, and light is transmitted to a photosensitive element of the camera through a lens. An optical signal is converted into an electrical signal, and the electrical signal is processed by the ISP and is converted into an image visible to naked eyes. The ISP may further perform algorithm optimization on image attributes such as noise, brightness, white balance, and contrast. In some embodiments, the ISP may be disposed in the camera 193. In this embodiment of this application, attributes of ISPs optimized by different vendors and different models may be set based on an actual requirement. For example, an ISP of an electronic device A may optimize noise and brightness of an image, and an ISP of an electronic device B may optimize brightness and contrast of an image. This is not limited in this application.

The camera 193 is configured to capture a static image or a video. An optical image of an object is generated through the lens and is projected onto the photosensitive element. The photosensitive element may be a charge-coupled device (charge-coupled device, CCD) or a complementary metal-oxide-semiconductor (complementary metal-oxide-semiconductor, CMOS) phototransistor. In some embodiments, the electronic device 100 may include one or N cameras 193, where N is a positive integer greater than 1.

In this embodiment of this application, an image captured by the camera 193 may be referred to as a raw image (or a raw image for short), and may be understood as a raw image file. The ISP may perform image processing on the raw image and output an RGB image or a YUV image. Both RGB and YUV are color spaces and are used for representing colors. In the YUV, "Y" indicates brightness, that is, a gray-scale value, and "U" and "V" indicate a color and saturation of an image and are used for specifying a color of a pixel. An RGB color model is a color standard in the industry, and various colors are obtained by changing red (R), green (G), and blue (B) color channels and superimposing the three colors on each other.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG 2, MPEG 3, and MPEG 4.

The NPU is a neural network (neural network, NN) computing processor. Based on a structure of a biological neural network, for example, a transmission mode between neurons in a human brain, the NPU quickly processes input information and can further continuously perform self-learning. Applications such as intelligent cognition of the electronic device 100 may be implemented through the NPU, for example, image recognition, facial recognition, voice recognition, and text understanding. In this embodiment of this application, the NPU may be configured to support an FW parameter prediction network in an FW parameter setting module. In other words, the NPU performs steps performed by the FW parameter prediction network in the FW parameter setting module.

The external memory interface 120 may be configured to be connected to an external storage card, for example, a micro SD card, to extend a storage capability of the electronic device 100. The external storage card communicates with the processor 110 through the external memory interface 120, to implement a data storage function, for example, to store files such as music and videos in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application program required by at least one function (for example, a voice playing function or an image playing function), and the like. The data storage area may store data (for example, audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function by using the audio module 170, the speaker 170A, the phone receiver 170B, the microphone 170C, the headset jack 170D, the application processor, and the like, for example, implement a music playing function and a recording function.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be configured to listen to music or make/answer a call in a hands-free mode by using the speaker 170A.

The phone receiver 170B, also referred to as an "earpiece", is configured to convert an electrical audio signal into a sound signal. When a call is answered or voice information is received through the electronic device 100, the phone receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display screen 194, the electronic device 100 detects intensity of the touch operation through the pressure sensor 180A. The electronic device 100 may alternatively calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing SMS messages is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device 100. In some embodiments, an angular velocity of the electronic device 100 around three axes (that is, x, y, and z axes) may be determined through the gyroscope sensor 180B. The gyroscope sensor 180B may be configured to implement image stabilization during photographing. For example, when a shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may alternatively be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather cover through the magnetic sensor 180D. In some embodiments, when the electronic device 100 is a clamshell phone, the electronic device 100 may detect opening and closing of a flip cover through the magnetic sensor 180D. Further, a feature such as automatic unlocking of the flip cover is set based on a detected opening or closing state of a leather cover or a detected opening or closing state of the flip cover.

The acceleration sensor 180E may detect accelerations in various directions (usually on three axes) of the electronic device 100. When the electronic device 100 is still, the acceleration sensor 180E may detect a magnitude and a direction of gravity. The acceleration sensor 180E may be further configured to identify a posture of the electronic device, and is used in applications such as switching between a landscape mode and a portrait mode or a pedometer.

The distance sensor 180F is configured to measure a distance. The electronic device 100 may measure a distance in an infrared manner or a laser manner. In some embodiments, in a photographing scenario, the electronic device 100 may measure a distance through the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may alternatively be used in a smart cover mode or a pocket mode to automatically perform screen unlocking or locking.

The ambient light sensor 180L is configured to sense ambient light brightness. The electronic device 100 may adaptively adjust brightness of the display screen 194 based on the sensed ambient light brightness. The ambient light sensor 180L may alternatively be configured to automatically adjust white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to avoid abnormal shutdown of the electronic device 100 caused by a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display screen 194, and the touch sensor 180K and the display screen 194 form a touchscreen, also referred to as a "touch control screen". The touch sensor 180K is configured to detect a touch operation performed on or near the touch sensor. The touch sensor may transmit the detected touch operation to the application processor to determine a type of a touch event. A visual output related to the touch operation may be provided on the display screen 194. In some other embodiments, the touch sensor 180K may alternatively be disposed on a surface of the electronic device 100 at a location different from that of the display screen 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively be in contact with a body pulse to receive a blood pressure beating signal. In some embodiments, the bone conduction sensor 180M may alternatively be disposed in a headset to be combined into a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may alternatively correspond to different vibration feedback effects for touch operations performed on different areas of the display screen 194. Different application scenarios (for example, a time reminder, information receiving, an alarm clock, and a game) may alternatively correspond to different vibration feedback effects. Touch vibration feedback effects may be further customized.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a Nano-SIM card, a micro-SIM card, a SIM card, and the like. A plurality of cards may be inserted into a same SIM card interface 195. The plurality of cards may be of a same type or different types. The SIM card interface 195 is alternatively compatible with different types of SIM cards. The SIM card interface 195 is alternatively compatible with an external storage card. The electronic device 100 interacts with a network through the SIM card, to implement functions such as making/answering a call and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100. In another embodiment, for example, if the electronic device 100 is a vehicle-mounted device, the system may be a Linux system. This is not limited in this application.

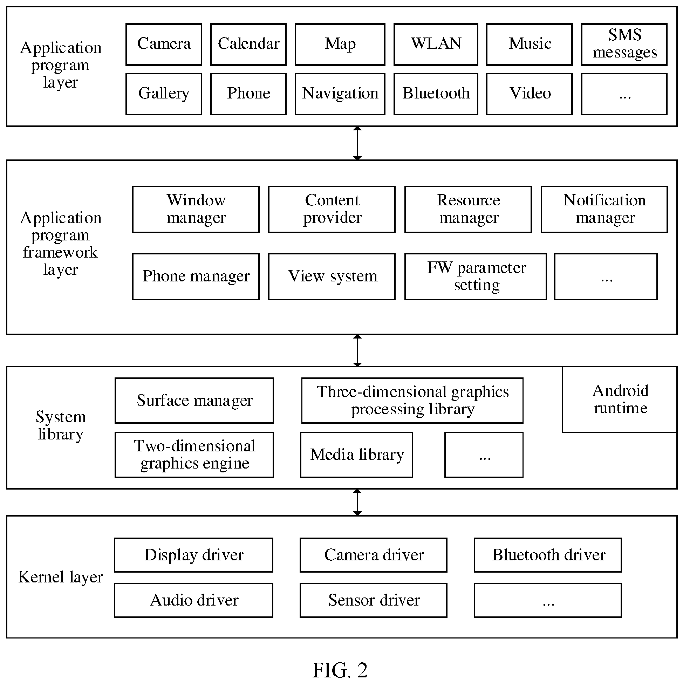

FIG. 2 is a block diagram of the software structure of the electronic device 100 according to this embodiment of this application.

In a layered architecture of the electronic device 100, software is divided into several layers, and each layer has a clear role and task. The layers communicate with each other through a software interface. In some embodiments, the Android system is divided into four layers: an application program layer, an application program framework layer, an Android runtime (Android runtime) and system library, and a kernel layer from top to bottom.

The application program layer may include a series of application program packages.

As shown in FIG. 2, the application program packages may include application programs such as Camera, Gallery, Calendar, Phone, Map, Navigation, WLAN, Bluetooth, Music, Video, and SMS messages.

The application program framework layer provides an application programming interface (application programming interface, API) and a programming framework for an application program at the application program layer. The application program framework layer includes some predefined functions.

As shown in FIG. 2, the application program framework layer may include a window manager, a content provider, a view system, a phone manager, a resource manager, a notification manager, an FW parameter setting module, and the like.

The window manager is configured to manage a window program. The window manager may obtain a size of the display screen, determine whether there is a status bar, perform screen locking, take a screenshot, and so on.

The content provider is configured to: store and obtain data, and enable the data to be accessed by an application program. The data may include a video, an image, audio, calls that are made and answered, a browsing history and favorites, an address book, and the like.

The view system includes visual controls, for example, a control for text display and a control for image display. The view system may be configured to construct an application program. A display interface may include one or more views. For example, a display interface including an SMS message notification icon may include a text display view and an image display view.

The phone manager is configured to provide a communication function for the electronic device 100, for example, management of a call status (including connected, hang-up, and the like).

The resource manager provides various resources for an application program, for example, a localized character string, an icon, an image, a layout file, and a video file.

The notification manager enables an application program to display notification information in a status bar, and may be configured to convey a notification-type message that may automatically disappear after a short pause without requiring user interaction. For example, the notification manager is configured to notify download completion and provide a message reminder. The notification manager may alternatively be a notification that appears in a top status bar of the system in a form of a graph or scroll bar text, for example, a notification of an application program that is running in the background, or may be a notification that appears on the screen in a form of a dialog window. For example, text information is displayed in the status bar, an alert tone is made, the electronic device vibrates, or the indicator light blinks.

The FW parameter setting module may include an FW parameter prediction network. The FW parameter prediction network is configured to predict a corresponding FW parameter based on a scenario requirement. The FW parameter setting module may be located at an application layer. In this embodiment of this application, the FW parameter obtained by the FW parameter prediction network may also be referred to as an ISP parameter, an FW hyperparameter, or an ISP hyperparameter, and may be set based on an actual requirement. This is not limited in this application. It may be understood that, in a subsequent use process, the ISP may obtain an image processing parameter based on the FW hyperparameter and a preset image processing parameter function. The ISP may process a raw image based on the image processing parameter.

Optionally, in another embodiment, the FW parameter setting module may alternatively run at the application layer, and may be understood as a segment of code running on an NPU. This is not limited in this application.

Optionally, a user may update the FW parameter setting module by updating the system of the electronic device. For example, for an electronic device on which an FW parameter setting module is not installed, a user may perform an operation on the electronic device, and the electronic device may obtain an updated version from a cloud and update a system based on the updated version, to install the FW parameter setting module.

The Android runtime includes a kernel library and a virtual machine. The Android runtime is responsible for scheduling and management of an Android system.

The kernel library includes two parts: a function that needs to be invoked in a java language and a kernel library of Android.

The application program layer and the application program framework layer run on the virtual machine. The virtual machine executes java files of the application program layer and the application program framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of application programs.

The media library supports playback and recording in a plurality of commonly used audio and video formats, static image files, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and the like.

It may be understood that the components included in the system framework layer, and the system library and runtime layer that are shown in FIG. 2 do not constitute a specific limitation on the electronic device 100. In some other embodiments of this application, the electronic device 100 may include more or fewer components than those shown in the figure, or some components may be combined, or some components may be split, or different component arrangements may be used.

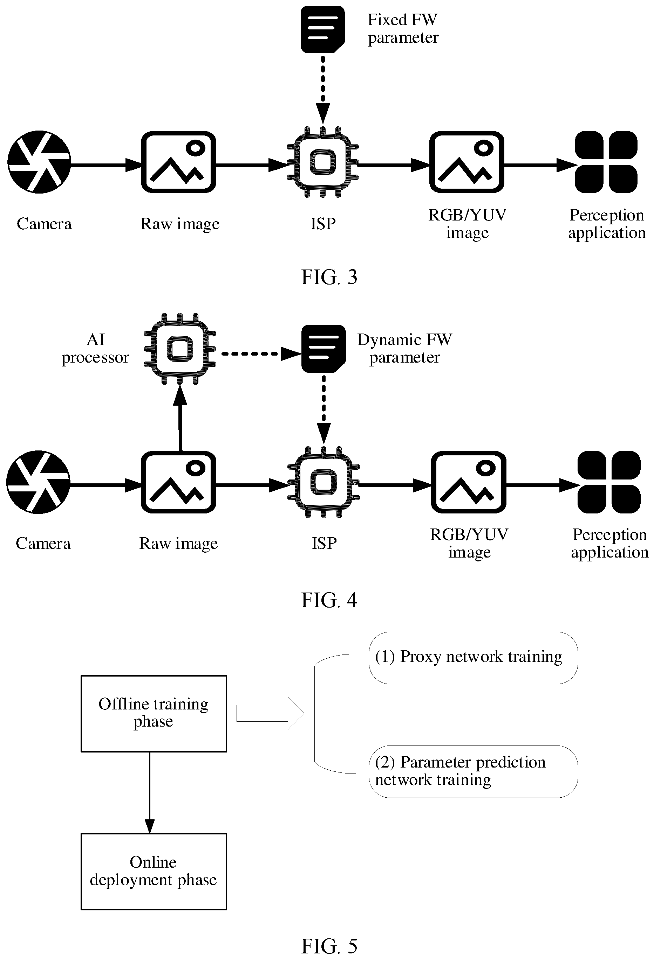

To better understand the technical solutions in embodiments of this application, before the image processing method in embodiments of this application is described, an image processing method in embodiments of a conventional technology is briefly described with reference to FIG. 3. Refer to FIG. 3. For example, a camera in an electronic device captures an image. The image is referred to as a raw image. An ISP may obtain an FW parameter from a storage (which may also be referred to as a shared memory, for example, a double data rate (Double Data Rate) memory, where this is not limited in this application). The FW parameter is set before delivery of the electronic device, and the DDR stores a set of FW parameters. The FW parameter may be understood as an array. The FW parameter may be understood as an array used for adjusting at least one image attribute in an ISP processing process. For example, the ISP may adjust a brightness attribute in the raw image based on a first parameter in the FW parameter, so that brightness of a generated RGB (which may alternatively be YUV, where details are not described below again) image is higher or lower. This is not limited in this application.

An application (for example, a perception application or another application such as a security protection application, where this is not limited in this application and is not described below again) in the electronic device may obtain an RGB image, and perform corresponding processing on the RGB image. For example, the perception application may perform AI recognition on the RGB image, to recognize a person or other things in the RGB image. This is not limited in this application.

It should be noted that the modules may further include interaction with another module. For example, the ISP may obtain a raw image by using a camera driver. This is not limited in this application. Details are not described below again.

In the conventional technology shown in FIG. 3, because the FW parameter is set before delivery of the electronic device, the FW parameter may be understood as a fixed FW parameter. In other words, the ISP processes all obtained raw images in a same manner. For example, if the first parameter in the FW parameter indicates to adjust brightness (that is, the brightness attribute) of the raw image to a first threshold, for each raw image, the ISP adjusts a brightness parameter of the raw image to the first threshold based on the FW parameter. However, this adjustment manner is excessively simple and is not applicable to all scenarios. For example, in a vehicle-mounted device, brightness of an image obtained by the camera in a tunnel is low. If the ISP still adjusts, based on a preset parameter, a brightness parameter of the raw image obtained by the camera in the tunnel to the first threshold, brightness of an RGB image generated by the ISP may still be low, and consequently a downstream application (for example, the perception application) may fail to accurately recognize an object in the image.

FIG. 4 is a diagram of a principle of an image processing method according to an embodiment of this application. Refer FIG. 4. In the image processing method in this embodiment of this application, an FW parameter setting module (specifically, an FW parameter prediction network) running on an artificial intelligence (Artificial Intelligence, AI) processor (which may be, for example, an NPU or a TPU, where this is not limited in this application) may predict a corresponding optimal FW parameter (the optimal FW parameter is referred to as a dynamic FW parameter in this application to distinguish from the FW parameter in FIG. 3) based on a raw image, and an ISP may perform image processing on the raw image based on the dynamic FW parameter predicted by the AI processor and generate a corresponding RGB image. A perception application (or another application) may perform corresponding processing, for example, image recognition, based on the RGB image. According to the image processing method in this embodiment of this application, FW parameters may be dynamically adjusted based on a scenario requirement, so that the ISP can perform adaptive processing on images obtained by a camera in different scenarios, to obtain a processing result in which effects of the image better satisfy the scenario requirement and the image is clearer, so as to improve recognition accuracy of a downstream application.

An application scenario of an assisted driving or self-driving perception system is used as an example. In an assisted driving or self-driving service, a vehicle-mounted camera (that is, a camera carried on a vehicle-mounted device) and a vehicle-mounted device (for example, an MCU in the vehicle-mounted device) need to perform real-time multi-type perception on a road environment, for example, 2D/3D target detection, lane line detection, and scenario semantic segmentation. For a specific detection manner, refer to related descriptions in embodiments of conventional technologies. This is not limited in this application. Currently, such a computer vision perception task is usually carried by a depth model based on a CNN (Convolutional Neutral Network, convolutional neural network) or a transformer architecture. For a same raw image (that is, a raw image) captured by the camera, when different FW parameters are set, output images (for example, RGB or YUV images) with different image effects can be obtained. In this case, when these images are input to the CNN or a transformer perception model, different prediction results are obtained, affecting accuracy and reliability of a vehicle-mounted perception system and even a regulation and control system. In this embodiment of this application, the FW parameter prediction network in the FW parameter setting module may predict a group of most suitable FW parameters for each raw image, so that an RGB or YUV image obtained by processing the raw image by the ISP has optimal prediction effects in one or more perception tasks, to improve perception accuracy in the assisted driving or self-driving scenario. For example, in an extremely low illumination scenario, it is expected that a group of parameters for significantly improving brightness is predicted for an ATR (Adaptive Tone Reproduction, adaptive tone reproduction) module, to improve a capability of restoring shadow details of an image, and a group of parameters with weak noise reduction strength is predicted for a noise reduction module, to reduce an image detail loss caused by smearing. In a rain and fog scenario, it is expected that a group of parameters for significantly improving contrast is predicted for a DRC (Dynamic Range Compression, dynamic range compression) module, to compensate for an object contour loss caused by low environmental visibility.

It should be noted that, in this embodiment of this application, the application scenario of assisted driving or self-driving is used as an example for description. Specific implementations of other application scenarios are the same. Examples are not described one by one again in this application, and details are not described below again.

FIG. 5 is a schematic flowchart of an example of an image processing method. Refer to FIG. 5. The image processing method in this embodiment of this application may include an offline training phase and an online deployment phase. The offline phase includes but is not limited to the following two phases:
(1) a proxy network training phase; and
(2) an FW parameter prediction network training phase.

The proxy network may be understood as a network that replaces an ISP, and a processing result of the proxy network is the same as or similar to a processing result of the ISP. It may be understood as that a process of proxy network training is a process of gradually making a result of processing an image by the proxy network approximate the processing result of the ISP.

The FW parameter prediction network training phase may be understood as training an FW parameter prediction network based on a trained proxy network, to obtain an FW parameter prediction network with a more accurate prediction result. The prediction result is an FW parameter.

For example, optionally, in the online deployment phase, the parameter prediction network obtained in the offline training phase is deployed in a target device. The target device may be a terminal device, a vehicle-mounted device, a security surveillance device, or the like. This is not limited in this application.

The following describes in detail the offline training phase and the online deployment phase shown in FIG. 5.

### Offline training phase:

In this embodiment of this application, the offline training phase may be performed by a computing node. The computing node may be any device, for example, a computer, a server, or a computer. Specifically, the steps in the offline phase may be performed by a GPU processor in the computing node. This is not limited in this application.

In this embodiment of this application, the offline training phase may be performed at any time point, to obtain a trained parameter prediction network. In an example, an FW parameter setting module that supports a parameter prediction network may be installed on an electronic device before delivery. In another example, the offline training phase may alternatively be periodically performed (for example, once a month) to update the parameter prediction network. The computing node may upload an updated parameter prediction network to a cloud (the cloud includes one or more servers). The cloud may push a system update version to the electronic device. The system update version includes the parameter prediction network. The electronic device may update the FW parameter setting module based on the system update version, to obtain a new parameter prediction network.

In this embodiment of this application, an operator needs to prepare data and a model before the offline training phase starts.

The data to be prepared includes but is not limited to the following:
a. N raw images, where N may be any value: For example, the operator may control an image sensor (for example, a vehicle-mounted camera) to capture an image, so as to obtain the N raw images, which are referred to as training raw images below. Optionally, a scenario covered by the captured image matches as much as possible a working environment in which an electronic device (for example, a vehicle-mounted device or a terminal device) in a deployment phase is located. For example, for the vehicle-mounted device, a working environment of the vehicle-mounted device may include a tunnel and a road in different weather conditions. The operator may control the image sensor to capture images of a plurality of tunnels, images of different roads in different weather conditions, and the like. This is not limited in this application.

Certainly, a larger quantity of raw images participating in training and a larger difference between the images indicate a more accurate training result of the parameter prediction network. For example, the difference between the images is optionally a difference value between parameters of the images, for example, including the noise parameter and the brightness parameter described above.

The image in this embodiment of this application, for example, a raw image or an RGB image, is an array for a computer. Correspondingly, in this embodiment of this application, in the descriptions, the image may be actually understood as an array corresponding to the image, or may be further understood as a parameter corresponding to an array of the image. In this embodiment of this application, any process of processing an image, for example, processing an image by the ISP, may be understood as processing a pixel value corresponding to the image. Details are not described below again.

In a possible implementation, for electronic devices of different types or electronic devices of a same type but different models, images captured by cameras of the electronic devices may be the same or different. For example, if a vehicle-mounted device A and a vehicle-mounted device B are vehicle-mounted devices of different models from a same manufacturer, parameters of cameras of the vehicle-mounted devices are different, and captured raw images are different. The images may optionally vary in attributes (for example, brightness and a color temperature).

In this embodiment of this application, that the attributes are different is optionally that types, quantities, and/or strength (which may alternatively be levels, brightness, or the like) of the attributes are different. For example, the camera of the vehicle-mounted device A and the camera of the vehicle-mounted device B capture a same picture in a same environment. Attributes of the raw image captured by the camera of the vehicle-mounted device A include but are not limited to an attribute A (for example, a color temperature), an attribute B (for example, white balance), and an attribute C (for example, brightness), and attributes of the raw image captured by the camera of the vehicle-mounted device B include but are not limited to an attribute A, an attribute B, an attribute D (for example, noise), and an attribute E (for example, Gamma). The attribute A of the image captured by the camera of the vehicle-mounted device A is the same as or different from the attribute A of the image captured by the camera of the vehicle-mounted device B in terms of a value (which may alternatively be a level). This is not limited in this application. Correspondingly, in this embodiment of this application, in the training phase, the operator may perform a training operation on devices of different types and/or different models, to obtain parameter prediction networks corresponding to the devices of the different types and/or the different models. In this application, only a training process corresponding to a single device is used as an example for description. Actually, in the training phase, the computing node may repeatedly perform the training phase in this embodiment of this application based on different devices, to obtain corresponding parameter prediction networks. Examples are not described one by one again in this application.

b. N groups of FW parameters: For example, the operator may obtain the N groups of FW parameters through sampling by using a sampling algorithm (a corresponding formula may be set based on an actual requirement, and this is not limited in this application), for example, a Latin-Hypercube sampling algorithm. As described above, the FW parameters are arrays. Correspondingly, the N groups of FW parameters may also be understood as N arrays.

In this embodiment of this application, each group of training FW parameters is optionally a group of vectors whose length is n. In this embodiment of this application, a value of n is related to a processing capability of the ISP. As described above, attributes processed by ISPs of different models may be the same or different. For example, if an ISP of a model A is configured to process q attributes such as brightness and a color temperature, n is related to q. Optionally, one parameter in the FW parameters may be used for adjusting one attribute, or a plurality of parameters in the FW parameters may be used for adjusting one attribute. This is not limited in this application.

It should be noted that, to distinguish from the FW parameter in the online deployment process, an FW parameter in a preparation process is referred to as a training FW parameter in this embodiment of this application.

In this embodiment of this application, an example in which a quantity of raw images participating in training is equal to N (that is, a quantity of groups of FW parameters) is used for description. In another embodiment, a quantity of raw images may alternatively be greater than N or less than N, provided that each raw image corresponds to one group of FW parameters (the corresponding FW parameters may be the same or different). Certainly, a larger quantity of FW parameters, that is, a larger quantity of samples participating in training, indicates that a network (for example, a proxy network) obtained through training much approximates a user requirement.

c. CV (Computer Vision, computer vision) perception network (which may also be referred to as a CV network, a CV task network, a perception network, a perception model, or the like for short, where this is not limited in this application): The CV perception network is configured to predict a specific computer vision task, for example, perform 2D/3D box prediction on an object, for example, a vehicle, a pedestrian, or a traffic sign in a road scenario, perform semantic segmentation on an instance in the scenario, and track a specific object. It should be noted that the CV perception network in this embodiment of this application does not specify a specific perception task, provided that the task has a specific target function and the perception network has an end-to-end training feature. For most of supervised CV tasks and most of depth models built based on a CNN, these two prerequisites are easily satisfied. It should be further noted that, in consideration of power consumption and real-time requirements during online end deployment, in this embodiment of this application, by default, the CV perception network receives an RGB or YUV image as an input, and outputs a prediction result needed by a specific task after the input is executed by a series of computing modules or sub-networks (for example, a backbone (backbone network) and an RPN (Region Proposal Network, region proposal network)), for example, a 2D/3D detection box, an object category label, a prediction confidence, a segmentation mask, and an object motion track.

d. Truth label: For example, the operator may set a truth label for a raw image used for training, to identify a real result of the raw image executed by the CV perception network. The truth label includes but is not limited to: a 2D/3D detection box label, an object category label, a prediction confidence label, a segmentation mask label, an object motion track label, and the like. A specific setting is based on the CV perception network. For example, if the CV perception network is configured to perform object category recognition on an RGB image, the operator may preset a truth label for the raw image, that is, set, in a manual identification manner, the object category label included in the raw image. For example, the raw image includes images of a kitten and a dog, and the object category label that is set by the operator for the raw image includes a kitten label and a dog label. A function of the truth label is to compare with a result actually output by the CV perception network in a training process, to determine a deviation between the result that is output by the CV perception network and the real result (that is, the truth label). Specific details are provided in the following embodiments.

e. Proxy network: In this embodiment of this application, the proxy network may be a convolutional neural network (CNN), a recurrent neural network (RNN), or some other depth models (for example, a transformer). A specific model type used by the proxy network is not limited in the present invention, provided that the proxy network receives a raw image and a group of FW parameters as inputs and has differentiability.

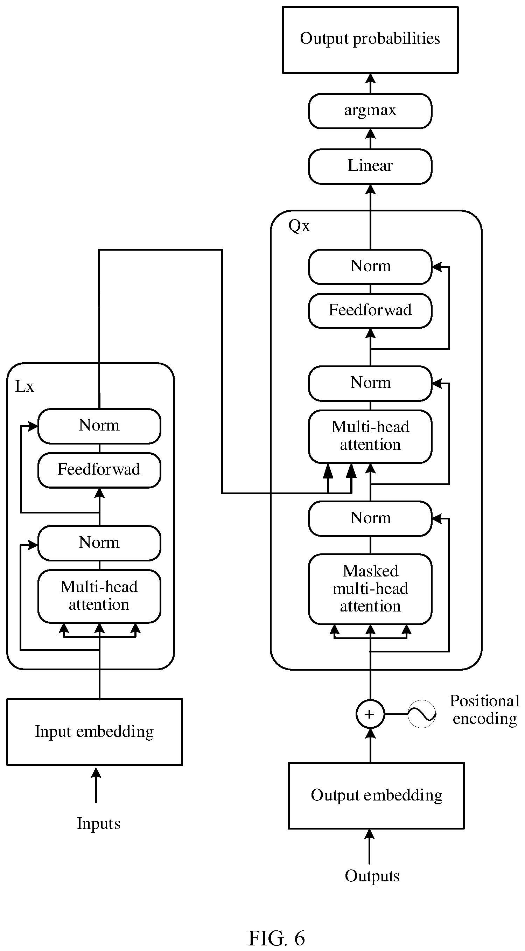

For example, an initial weight is further set for the proxy network. To distinguish from a weight of the FW parameter prediction network, in this embodiment of this application, the weight of the proxy network is referred to as a proxy network weight, and the weight of the FW parameter prediction network is referred to as an FW parameter prediction network weight. For example, the weight in this embodiment of this application may be a group of arrays. An example of the proxy network formed by a transformer model is used. FIG. 6 is a diagram of an example of a structure of a proxy network. Refer to FIG. 6. The structure is a structure of a transformer model, and includes an encoder (encoding) part and a decoder (decoding) part. An encoder includes but is not limited to modules such as a multi-headed attention layer (Multi-Head Attention layer), layer normalization (Layer Normalization) (that is, (Norm) in FIG. 6), and a feedforward neural network (Feedforward neural network) (that is, Feedforward in FIG. 6). A decoder includes but is not limited to modules such as a masked multi-head attention (Masked multi-head attention) layer, a multi-head attention layer, layer normalization (that is, (Norm) in FIG. 6), and a feedforward neural network (that is, feedforward in FIG. 6). Each module corresponds to a group of weights, and a combination of weights of all modules forms a weight of the proxy network.

f. FW parameter prediction network: The FW parameter prediction network is a deep network deployed on an AI processor. The FW parameter prediction network reads, on demand from a storage (for example, a DDR), to-be-processed raw image data in a video stream captured by a current camera, and performs optimal FW parameter prediction (which may also be understood as network inference). The FW parameter prediction network writes predicted parameters (a group of vectors whose length is N, where N is a quantity of FW parameters that may be dynamically configured) into a shared memory of ISP firmware to overwrite original FW parameters.

In this embodiment of this application, similar to the proxy network, the FW parameter prediction network may be a convolutional neural network (CNN), a recurrent neural network (RNN), or some other depth models (for example, a transformer). A specific model type used by the FW parameter prediction network is not limited in the present invention, provided that the FW parameter prediction network has differentiability.

For example, an initial weight is also set for the FW parameter prediction network. The initial weight may be randomly set by the operator. This is not limited in this application. A weight of the FW parameter prediction network may be referred to as an FW parameter prediction network weight, to distinguish from other weights. For other parts that are not described, refer to related descriptions of the proxy network weight. Details are not described herein again.

### (1) Proxy network training phase

For example, the proxy network is configured to perform a proxy operation on an indifferentiable image processing algorithm in the ISP by using a differentiable model, to allow a first-order optimization algorithm, for example, a gradient descent algorithm to perform end-to-end joint optimization on a complete data path of the FW parameter prediction network, the proxy network, and the CV perception network.

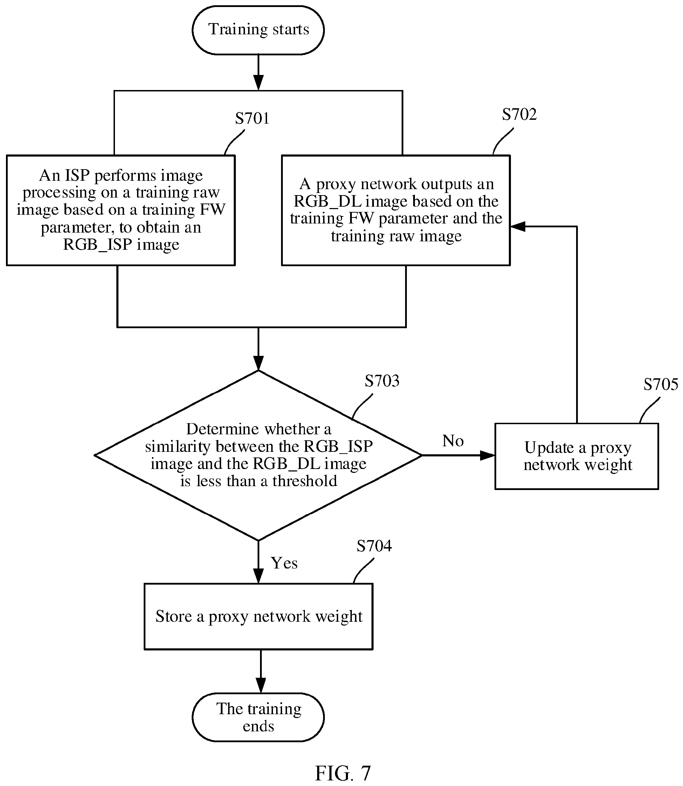

FIG. 7 is a schematic flowchart of an example of proxy network training. Refer to FIG. 7. A training procedure specifically includes but is not limited to the following steps.

S701: The ISP performs image processing on a training raw image based on a training FW parameter to obtain an RGB_ISP image.

For example, the ISP is a SoC subsystem including two parts of firmware and hardware components (some ISPs further include some software components running on an AI processor). The firmware part is responsible for performing some scheduling works needed by an image processing algorithm, for example, reading the FW parameter from a specified internal memory area, controlling enabled/disabled states and an execution sequence of modules, and changing a status bit of each register, and for performing some low-strength logical operations. The hardware part is responsible for performing high-strength operations in the image processing algorithm, and computing logic is controlled by the status bit in the register.

As described above, in a preparation phase, an operator prepares N training FW parameters and N training raw images. The operator may preset correspondences between the N training FW parameters and the N training raw images. For example, a raw image 1 corresponds to an FW parameter 1, a raw image 2 corresponds to an FW parameter 2, ..., and a raw image N corresponds to an FW parameter N. The correspondence may be set randomly, provided that each raw image corresponds to one FW parameter. Different raw images correspond to different FW parameters as much as possible to increase a difference between samples.

For example, the computing node may include N ISPs, and each ISP is configured to perform image processing on a raw image based on an FW parameter, to obtain N RGB images (which may alternatively be YUV images, where this is not limited in this application, and details are not described below again). In this embodiment of this application, that the ISP processes the raw image based on the FW parameter may specifically include but is not limited to the following: The ISP carries an image processing parameter algorithm or an image processing parameter function, and the ISP may obtain a corresponding image processing parameter based on a preset image processing parameter algorithm and an FW parameter (that is, an FW hyperparameter). The raw image is an array, and the array includes a plurality of gray-scale values. The ISP may adjust at least one gray-scale value in the array based on the image processing parameter, to change an attribute of the raw image. For example, the ISP adjusts, based on the image processing parameter, some gray-scale values that are of the raw image and that are lower than a threshold (which may be set based on an actual requirement) to expected values, so that brightness of a generated RGB image is higher than brightness before adjustment. For specific processing of the ISP, refer to related content in embodiments of conventional technologies for specific details. Details are not described in this specification, and details are not described below again.

In this embodiment of this application, to distinguish from another RGB image, the RGB image obtained by the ISP is referred to as an RGB_ISP image in this embodiment of this application. An image processing process of the ISP may be understood as that an attribute of a corresponding raw image is corrected (or processed) based on the FW parameter, to obtain an RGB image. An attribute of the RGB image is the attribute processed based on the FW parameter. For example, the raw image 1 includes a color temperature A, and the ISP performs image processing on the raw image 1 based on the FW parameter (the FW parameter includes a color temperature threshold, which may also be referred to as a color temperature correction parameter or a color temperature correction threshold, and this is not limited in this application), to obtain an RGB image 1. A color temperature B of the RGB image 1 is the same as or different from a level of the color temperature A of the raw image 1. For specific details of the image processing of the ISP, refer to related descriptions in embodiments of conventional technologies. Details are not described again in this application.

In a possible implementation, the ISP may alternatively perform image processing on each of the N training raw images based on each of the N training FW parameters, to obtain N×N RGB_ISP images, so as to expand a scale of a training set. A specific training manner may be configured based on an actual requirement. This is not limited in this application.

It should be noted that, as described above, processing and output results of ISPs of electronic devices of different models or different types may be different. Therefore, the ISP in this embodiment of this application may be any model of ISP of any type of device. It is assumed that all procedures in FIG. 7 are performed for an ISP of an electronic device of a model A. In this case, both the proxy network obtained in the procedure in FIG. 7 and the FW parameter prediction network obtained in the following embodiments correspond to the electronic device of the model A. If an FW parameter prediction network corresponding to an electronic device of a model B needs to be obtained, the training procedures in FIG. 7 and the following embodiments need to be performed again based on the electronic device of the model B. For example, the ISP in S701 is replaced with an ISP of the electronic device of the model B. In this embodiment of this application, no repeated description is provided by using an example, and details are not described below again.

In a possible implementation, all components (for example, the ISP) or modules in the training phase in this embodiment of this application may be integrated into a computing node and run by the computing node. For example, an ISP in the computing node is the ISP of the electronic device of the model A.

In another possible implementation, the computing node may include a plurality of independent components or modules. For example, the ISP and the proxy network are different components, and the proxy network may be on a GPU of the computing node. The ISP may be performed by the ISP of the electronic device of the model A and output to the GPU of the computing node. A system structure of the computing node may be configured based on an actual requirement. This is not limited in this application.

S702: The proxy network outputs an RGB_DL image based on the training FW parameter and the training raw image.

For example, as described above, the proxy network may be formed by a deep perception model (which may alternatively be another neural network, where this is not limited in this application). The computing node uses the N raw images and the N training FW parameters as inputs of the proxy network. The proxy network performs inference (or an operation) based on the training FW parameters, the N raw images, and an initial proxy network weight, to output the RGB_DL image.

In this embodiment of this application, as described above, the operator has preset the correspondences between the N raw images and the N FW parameters. Correspondingly, the proxy network still performs processing based on the specified correspondence. It may be understood that, the correspondence between the raw image and the FW parameter that is used when the proxy network performs processing needs to be consistent with the correspondence between the raw image and the FW parameter that is used when the ISP performs the image processing, to have comparability.

In this embodiment of this application, the computing node may determine, based on a processing capability of the proxy network, a quantity of raw images and FW parameters (that is, a quantity of groups) that are input to the proxy network each time. The correspondence between the raw image and FW parameter that are input remains unchanged. The quantity of raw images (and FW parameters) that are input each time may be the same or different. For example, in this embodiment of this application, the computing node may input 20 raw images and 20 FW parameters to the proxy network each time. The value is merely an example, and may be set based on an actual requirement. This is not limited in this application.

For example, the proxy network may perform, based on a current weight (which may be the initial weight or an updated weight), an operation on a plurality of raw images and FW parameters that are input each time. In an operation process, similar to the ISP, the proxy network processes the raw images based on the FW parameter corresponding to each raw image, to obtain a processing result.

For example, the proxy network processes the N raw images and the N groups of FW parameters (which may be processed in batches), to obtain N RGB_DL images.

For example, as described above, the initial weight is set for the proxy network, and the initial weight is randomly set by the operator. The result (that is, an array) output by the proxy network in an initial phase (for example, the 1^{st} training process or several previous training processes) may be meaningless. Correspondingly, the procedure shown in FIG. 7 in this embodiment of this application may be understood as that the proxy network is continuously trained to update the proxy network weight, so that the result that is output by the proxy network gradually approximates the result (that is, the RGB_ISP image) obtained through processing by the ISP in S701.

S703: Determine whether a similarity between the RGB_ISP image and the RGB_DL image is greater than a threshold.

For example, the computing node (which may be specifically a CPU of the computing node) obtains the N RGB_ISP images that are output by the ISP and the N RGB_DL images that are output by the proxy network. The computing node may obtain a similarity between two corresponding images based on correspondences between the N RGB_ISP images and the N RGB_DL images, to obtain N similarities. The computing node may obtain, based on the N similarities, an overall similarity between the RGB_ISP image obtained through processing by the ISP and the RGB_DL image obtained through processing by the proxy network.

The N RGB_ISP images correspond to the N RGB_DL images, and the N RGB_ISP images and the N RGB_DL images are RGB images obtained through processing based on same raw images and same FW parameters. For example, the computing node obtains a similarity between two corresponding images based on an RGB _ISP image 1 and an RGB_DL image 1. The RGB_ISP image 1 and the RGB_DL image 1 are respectively obtained by the ISP and the proxy network based on the raw image 1 and the FW parameter 1.

The following describes in detail a manner of obtaining a similarity between two images by using a specific example. For example, as described above, each image is an array. The RGB_ISP image 1 and the RGB_DL image 1 are used as an example. The RGB_ISP image 1 is denoted as *I^{out_ISP},* the RGB_DL image 1 is denoted as *I^{out_DL},* the raw image 1 is denoted as *I^{Raw},* and the FW parameter is p.

For example, the computing node calculates a difference value (which may also be referred to as an error, a similarity difference value, or the like, where this is not limited in this application) between *I^{out_ISP}* and *I^{out_DL},* and the difference value is denoted as L_1. For a specific calculation manner, refer to embodiments of conventional technologies. This is not limited in this application.

For example, the computing node may obtain, based on the foregoing manner, similarity difference values between each pair of the N RGB_ISP images and the N RGB_DL images, to obtain N similarity difference values, for example, L_1, ..., and L_N. The computing node calculates an average value of the N similarity difference values, that is, a similarity value between the RGB_ISP image obtained through processing by the ISP and the RGB_DL image obtained through processing by the proxy network, and the average value is denoted as L. Optionally, in another embodiment, a similarity value may alternatively be calculated in a calculation manner, for example, arithmetic averaging. This is not limited in this application.

For example, the computing node detects whether L is greater than (or equal to) a preset threshold. The preset threshold may be set based on an actual requirement. This is not limited in this application. The preset threshold indicates a degree of similarity between images, and a smaller preset threshold indicates a larger degree of similarity between two images. Correspondingly, a smaller L value indicates a higher similarity between the two images.

In an example, if the computing node detects that an L value is less than the threshold, which may also be understood as that the similarity is greater than the threshold, S704 is performed.

In another example, if the computing node detects that an L value is greater than or equal to the threshold, which may also be understood as that the similarity is less than the threshold, to be specific, a difference between the image output by the proxy network and the image output by the ISP is large, S705 is performed.

S704: Store the proxy network weight.

For example, when the difference between the image output by the proxy network and the image output by the ISP is small, it may be considered as that the processing capability of the proxy network approximates or is the same as that of the ISP. The computing node may store a current proxy network weight, and lock the proxy network weight, to avoid a change of the proxy network weight with subsequent processing.

S705: Update the proxy network weight.

For example, when the difference between the image output by the proxy network and the image output by the ISP is large, the proxy network weight needs to be adjusted again, so that the proxy network performs S702 again based on a new weight.

The computing node calculates a corresponding gradient value based on the current proxy network weight (denoted as *w^{t}*) by using an optimization algorithm, for example, a gradient descent algorithm, and performs gradient descent update on the current proxy network weight (*w^{t}*) based on the gradient value, to obtain an updated proxy network weight that is denoted as *w*^{*t*+1}. For a specific calculation method of the gradient descent algorithm, refer to related content in embodiments of conventional technologies. Details are not described again in this application. It should be noted that, in another embodiment, another algorithm may alternatively be used. This is not limited in this application.

For example, after the computing node obtains the updated weight (*w*^{*t*+1}), the proxy network may perform S702 again. In a process of performing S702 again, the proxy network processes the training FW parameter and the training raw image based on the updated weight (*w*^{*t*+1}). For a specific processing manner, refer to related content in the foregoing embodiments. Details are not described herein again. After obtaining an output result of the proxy network, the computing node may compare the output result of the proxy network with an output result (S701 needs to be performed only once) of the ISP again, and perform S704 or S705 based on a comparison result. A quantity of cycles depends on the L value in S703, that is, a similarity between images of the output result of the proxy network and the output result of the ISP. In any cycle, if the computing node detects that a similarity is greater than the threshold, in other words, the L value is less than the threshold, the proxy network weight is stored, and the training ends.

### (2) FW parameter prediction network training phase

In this embodiment of this application, the FW parameter prediction network is a deep network deployed on an AI processor. The FW parameter prediction network reads, on demand from a storage (for example, a DDR), to-be-processed raw image data in a video stream captured by a current camera, and performs optimal FW parameter prediction (which may also be understood as network inference). The FW parameter prediction network writes predicted parameters (a group of vectors whose length is N, where N is a quantity of FW parameters that may be dynamically configured) into a shared memory of ISP firmware to overwrite original FW parameters.

In this embodiment of this application, training the FW parameter prediction network may be understood as a process of making an output result of the FW parameter prediction network gradually accurate. As described above, the FW parameter prediction network is the same as the proxy network, and an initial weight is also set for the FW parameter prediction network. In a training process of the FW parameter prediction network, similar to training of the proxy network, the FW parameter prediction network weight is continuously updated in the process, so that the output result of the FW parameter prediction network is gradually optimized.

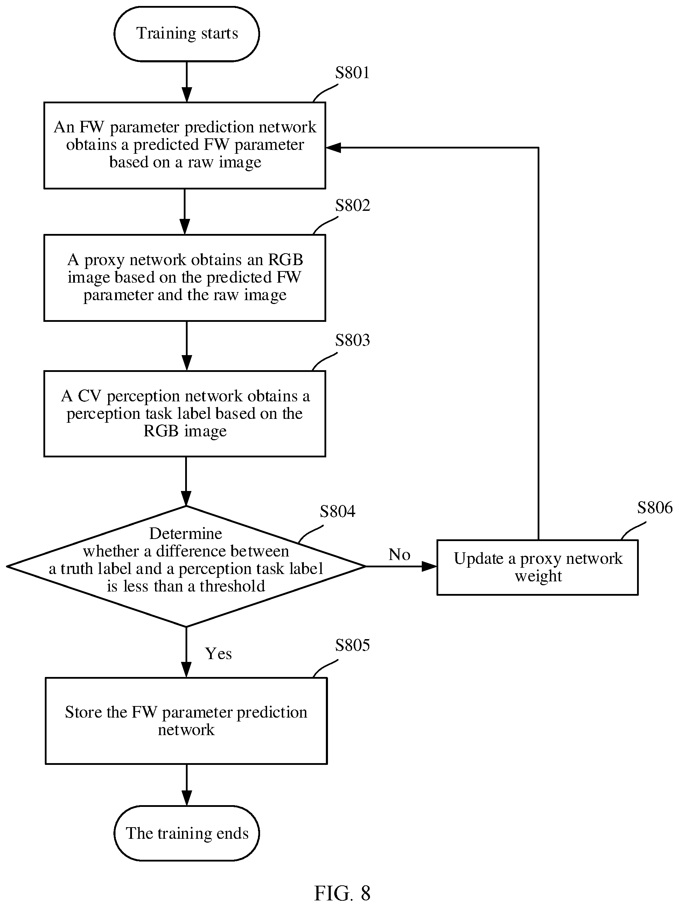

FIG. 8 is a schematic flowchart of an example of FW parameter prediction network training. Refer to FIG. 8. A training procedure specifically includes but is not limited to the following steps.

S801: The FW parameter prediction network obtains a predicted FW parameter based on a raw image.

For example, the computing node may input N raw images (that is, the N raw images in the preparation phase) to the FW parameter prediction network, and the FW parameter prediction network may process (or perform an operation on) the input N raw images based on a current weight (which may be the initial weight or an updated weight), to obtain N predicted FW parameters.

It should be noted that, in this embodiment of this application, an example in which an input sample in the FW parameter prediction network training phase, that is, the N raw images, is the same as an input sample in the proxy network training phase is used for description. In another embodiment, the input sample in the FW parameter prediction network training phase may be M images in the N raw images. Certainly, the input sample in the FW parameter prediction network training phase may alternatively be other M raw images different from those in the proxy network training phase. This is not limited in this application.

In a possible implementation, the computing node may input the N raw images to the FW parameter prediction network in batches based on a processing capability of the FW parameter prediction network. The quantity of raw images that are input each time may be the same or different. For example, in this embodiment of this application, the computing node may input 20 raw images to the FW parameter prediction network each time. The value is merely an example, and may be set based on an actual requirement. This is not limited in this application.

For example, the N predicted FW parameters that are output by the FW parameter prediction network are in one-to-one correspondence with the input raw images. For example, the FW parameter prediction network may output a predicted FW parameter 1 based on a raw image 1, and output a predicted FW parameter 2 based on a raw image 2.

Similar to the proxy network, the initial weight is set for the FW parameter prediction network, and the initial weight is randomly set by an operator. The result (that is, an array) output by the FW parameter prediction network in an initial phase (for example, the 1^{st} training process or several previous training processes) may be meaningless. However, in this embodiment of this application, the result that is output by the FW parameter prediction network is still referred to as the predicted FW parameter. Correspondingly, in this embodiment of this application, the procedure shown in FIG. 8 may be understood as continuously training the FW parameter prediction network, to update the FW parameter prediction network weight, and continuously optimize the result that is output by the FW parameter prediction network.

S802: The proxy network obtains an RGB image based on the predicted FW parameter and the raw image.

For example, after obtaining the N predicted FW parameters that are output by the FW parameter prediction network, the computing node may input the N raw images and the N predicted FW parameters to the proxy network. The N raw images are in one-to-one correspondence with the N predicted FW parameters. The correspondence is the correspondence described in S801.

The proxy network may process (or perform an operation on) the N raw images based on a current weight (that is, the weight obtained through training in FIG. 7) and the correspondences between the N raw images and the N predicted FW parameters, to obtain N RGB images. For example, the proxy network may process (or perform an operation on) the predicted FW parameter 1 and the raw image 1 as a pair of input parameters based on the current weight and a correspondence between the raw image 1 and the predicted FW parameter 1 (to be specific, the predicted FW parameter 1 is obtained by the FW parameter prediction network based on the raw image 1), to obtain an RGB image 1. For example, the computing node may obtain a correspondence between the raw image 1, the predicted FW parameter 1, and the RGB image 1.

It should be noted that, as described above, the proxy network has been trained in FIG. 7, and the result (that is, an RGB image) obtained by processing the raw image by the proxy network based on the current weight is the same as or approximate (that is, similar to) a result obtained through processing by an ISP of a specified model. In other words, in S802, the proxy network may be considered as an ISP, to perform image processing on the raw image to obtain a corresponding RGB image. Different from the ISP, the proxy network has the differentiability to implement end-to-end joint training between the FW parameter prediction network and the CV perception network.

In a possible implementation, the computing node may input the N raw images and the N FW prediction parameters to the proxy network in batches. For a specific implementation, refer to the foregoing descriptions. Details are not described herein again.

S803: The CV perception network obtains a perception task label based on the RGB image.

For example, as described above, in the preparation phase, the operator presets the CV perception network. A function of the CV perception network may be to output a corresponding perception task label based on an input raw image. A quantity and types of perception task labels depend on a task type of the CV perception network. For example, if the task type of the CV perception network is an object recognition type, the CV perception network may output a corresponding perception task label based on the input raw image, and the perception task label includes an object type label.

In this embodiment of this application, after obtaining the N RGB images that are output by the proxy network, the computing node may input the N RGB images (which may be input in batches, where for a specific processing manner, refer to the foregoing descriptions, and details are not described herein again) to the CV perception network. The CV perception network may process (or recognize) the N RGB images to obtain N perception task labels. The N RGB images are in one-to-one correspondence with the N perception task labels. Optionally, each perception task label may include a plurality of subtask labels, and types and a quantity of subtask labels are associated with the task type of the CV perception network. For detailed descriptions, refer to the foregoing descriptions. Details are not described herein again.

For example, in this step, the computing node may obtain correspondences between the N RGB images and the N perception task labels. In S802, the computing node further obtains correspondences between the N RGB images and the N raw images. Correspondingly, the computing node may obtain correspondences between the N perception task labels and the N raw images. For example, a perception task label 1 corresponds to the raw image 1, and a perception task label 2 corresponds to the raw image 2.

For example, as described above, in the preparation phase, the operator sets a truth label for each of the N raw images. The computing node may pre-obtain correspondences between N truth labels and the N raw images.

Correspondingly, in this embodiment of this application, the computing node may obtain the correspondences (the correspondences are one-to-one correspondences) between the N perception task labels and the N truth labels based on the correspondences between the N perception task labels and the N raw images and the correspondences between the N truth labels and the N raw images. For example, the perception task label 1 corresponds to a truth label 1, and the perception task label 2 corresponds to a truth label 2.

S804: Determine whether a difference between the truth label and the perception task label is less than a threshold.

For example, as described above, the computing node may obtain the correspondences between the N perception task labels and the N truth labels. The computing node may obtain, based on the correspondences between the N perception task labels and the N truth labels, a difference value (which may also be referred to as a difference value, a loss function, or the like, where this is not limited in this application) between a corresponding pair of a perception task label and a truth label, to obtain the N difference values. For a manner in which the computing node obtains the difference value between the truth label and the perception task label, refer to embodiments of conventional technologies. This is not limited in this application.

For example, the computing node may obtain an average value (which may alternatively be an arithmetic average, where this is not limited in this application) of the N difference values, and the average value is denoted as Q.

For example, the computing node detects whether Q is greater than (or equal to) a preset threshold. The preset threshold may be set based on an actual requirement. This is not limited in this application. The preset threshold indicates a difference between two labels. A smaller preset threshold indicates a smaller difference between the two labels. Correspondingly, a smaller Q value indicates a smaller difference between the two labels.

In an example, if the computing node detects that the Q value is less than the threshold, which may also be understood as that the difference is less than the threshold, S704 is performed.

In another example, the computing node detects that the Q value is greater than or equal to the threshold, and this may also be understood as that the difference is greater than the threshold. To be specific, the difference between the perception task label output by the CV perception network based on the RGB image output by the proxy network and the truth label is large, and this may also be understood as that an enhancement effect of the RGB image obtained by the proxy network based on the predicted FW parameter is poor, resulting in an inaccurate result recognized by the CV perception network. This may also be understood as that correction on the raw image by the predicted FW parameter cannot achieve an enhancement effect that can be recognized by the CV perception network. Correspondingly, the computing node performs S806.

S805: Store the FW parameter prediction network.

For example, when the difference between the perception task label output by the CV perception network and the truth task label is small (to be specific, less than a threshold), it may be considered as that an enhancement effect of the predicted FW parameter obtained by the FW parameter prediction network for the raw image satisfies a requirement of the CV perception network. Correspondingly, the computing node may store the FW parameter prediction network, to be specific, store a current structure (for example, a neural network structure) of the FW parameter prediction network and the current FW parameter prediction network weight that is denoted as *w^{f}.*

S806: Update the FW parameter prediction network weight.

For example, when the difference between the perception task label output by the CV perception network and the truth task label is large (to be specific, greater than the threshold), the FW parameter prediction network weight needs to be adjusted again, so that the FW parameter prediction network performs S801 again based on an updated weight.

For example, the computing node calculates a corresponding gradient value based on the current FW parameter prediction network weight (*w^{f}*) by using an optimization algorithm (which may be set based on an actual requirement, where this is not limited in this application), for example, a gradient descent algorithm, and performs gradient descent update on the current FW parameter prediction network weight (*w^{f}*) based on the gradient value, to obtain an updated FW parameter prediction network weight that is denoted as *w*^{*f*+1}*.* For a specific calculation method of the gradient descent algorithm, refer to related content in embodiments of conventional technologies. Details are not described again in this application. It should be noted that, in another embodiment, another algorithm may alternatively be used. This is not limited in this application.

For example, after the computing node obtains the updated weight *(w*^{*f* +1}), the FW parameter prediction network may perform S801 again. In a process of performing S801 again, the FW parameter prediction network processes the raw image based on the updated weight *(w*^{*f*+1}), to obtain the corresponding predicted FW parameter. For a specific processing manner, refer to related content in the foregoing embodiments. Details are not described herein again. For example, a quantity of cycles of the procedure in FIG. 8 depends on the Q value in S804, that is, the difference between the perception task label and the truth label. In any cycle, if the value Q is less than the threshold, the computing node stores the FW parameter prediction network and the corresponding FW parameter prediction network weight, and the training ends.

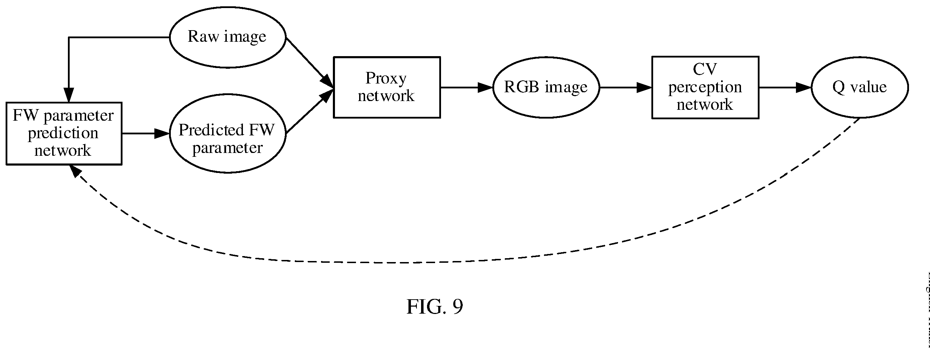

With reference with FIG. 8, FIG. 9 is a diagram of an example of a system structure of FW parameter prediction network training. Refer to FIG. 9. For example, the computing node inputs a raw image to the FW parameter prediction network. The FW parameter prediction network outputs a predicted FW parameter based on the input raw image. The predicted FW parameter and the raw image are used as inputs of the proxy network, and the proxy network outputs an RGB image. The RGB image is used as an input of the CV perception network, and the computing node may obtain a Q value (that is, a difference value or a loss function) based on an output of the CV perception network. When the Q value does not satisfy a condition, to be specific, is greater than a threshold, a system returns to a start location and perform a procedure in FIG. 9 again, until the Q value is less than the threshold.

Still refer to FIG. 5. In this embodiment of this application, the image processing method further includes the online deployment phase. In the online deployment phase, the FW parameter prediction network and the weight of the FW parameter prediction network that are stored in FIG. 8 are deployed in the target device. The target device is a device corresponding to the ISP in the training process. For example, if the ISP is the electronic device of the model A, the operator may deploy the FW parameter prediction network and the weight of the FW parameter prediction network that are stored by the computing node on the electronic device of the model A. Certainly, the electronic device of the model A may alternatively obtain and install the FW parameter prediction network and the weight of the FW parameter prediction network by using the cloud. This is not limited in this application.

For example, the target device loads the FW parameter prediction network and the weight of the FW parameter prediction network to the internal memory. An FW parameter prediction task works in an operating system as a resident process of the AI processor (for example, an NPU), and may also be understood as the FW parameter setting module (which may also be referred to as an FW parameter prediction module) in FIG. 2 or an FW parameter setting (prediction) application running at the application layer.

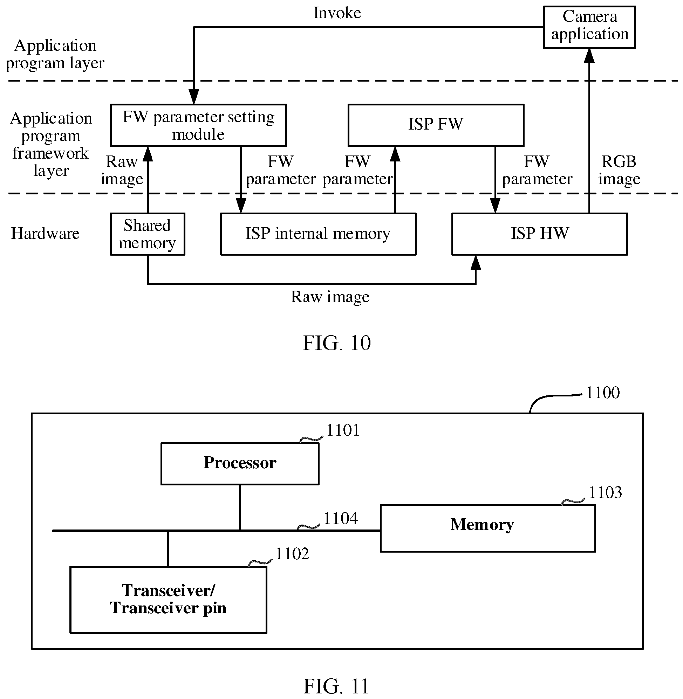

FIG. 10 is a schematic flowchart of an example of image processing. Refer to FIG. 10. For example, after being started, a camera application may send a trigger signal to an AI processor, to invoke an FW parameter setting module on the AI processor. The FW parameter setting module includes an FW parameter prediction network. For example, after the camera application is started, a camera is also invoked, and the camera starts to capture an image in response to the invoking by the camera application. In addition, the captured image is stored in a shared memory. The FW parameter setting module reads a raw image from the shared memory in response to the invoking by the camera application. In this embodiment of this application, only the shared memory is used as an example for description. In another embodiment, another storage may be used. This is not limited in this application.

For example, the FW parameter prediction network in the FW parameter setting module may process the input raw image based on an FW parameter prediction network weight, to predict a corresponding FW parameter. The FW parameter setting module writes the FW parameter into an ISP internal memory corresponding to ISP FW (ISP software). The ISP internal memory may be a part of the shared memory, or may be located in another storage. This is not limited in this application. For example, the ISP internal memory may have stored the FW parameter, and the stored FW parameter may be an initial FW parameter, or may be written by the FW parameter setting module last time. This is not limited in this application. Correspondingly, the FW parameter setting module may delete the FW parameter currently stored in the ISP internal memory, and write the newly predicted FW parameter.

The ISP FW may read the FW parameter (that is, the newly written FW parameter) from the ISP internal memory. The ISP FW may indicate the FW parameter to ISP HW. For example, the ISP FW may change states of an FW register and an HW register, to write the FW parameter into the FW register and the HW register. The ISP HW reads the raw image from the shared memory, and performs image processing on the raw image based on the obtained FW parameter (for example, read from the register), to obtain an RGB image. The ISP HW may output the obtained RGB images to the camera application. The camera application may display the obtained RGB image on a display screen of an electronic device.

In a possible implementation, using a self-driving application as an example, after obtaining the RGB image output by the ISP HW, the self-driving application may recognize the RGB image based on a CV perception network of the application, to obtain a recognition result, and perform a self-driving operation based on the recognition result.

In another possible implementation, after the FW parameter setting module is invoked by the application, the FW parameter prediction network in the FW parameter setting module may predict each frame of raw image captured by the camera, in other words, perform the procedure in FIG. 10 for each raw image.

In still another possible implementation, after the FW parameter setting module is invoked by the application, the FW parameter prediction network in the FW parameter setting module may predict, based on a preset periodicity (which, for example, may be set based on interval duration, or may be set based on a frame rate of the image captured by the camera, or may be set based on an actual requirement, where this is not limited in this application), the raw image captured by the camera. For example, the FW parameter setting module may perform prediction once every 1s, to reduce a workload of the AI processor.

In still another possible implementation, the FW parameter setting module may work in a sleep mode after being invoked by the application, and perform prediction only once when an application layer sends a wake-up signal to the FW parameter setting module. For example, to reduce the workload of the AI processor, the self-driving application may send indication information to the FW parameter setting module only when a CPU (for example, the self-driving application) detects a significant change (for example, entering or leaving a tunnel or a garage, or day/night alternation) in a driving environment, to trigger the FW parameter setting module to perform FW parameter prediction, where the parameter prediction may be performed only once.

In still another possible implementation, the FW parameter setting module may alternatively be triggered after the electronic device is started.

In still another possible implementation, to reduce load of the AI processor, an input of the FW parameter setting module may be a raw image with low resolution after downsampling. A downsampling operation may be performed by the AI processor, or may be performed by the ISP HW. This is not limited in this application. For example, the ISP HW may obtain the raw image from the shared memory, perform downsampling on the raw image, and output the raw image with low resolution to the shared memory. The FW parameter setting module may read the raw image with low resolution from the shared memory and perform subsequent processing. Optionally, the raw image read by the FW parameter setting module from the shared memory may alternatively be obtained through processing on the original raw image by other encoding or compression modules. This is not limited in this application.

For example, FIG. 11 is a block diagram of an apparatus 1100 according to an embodiment of this application. The apparatus 1100 may include a processor 1101 and a transceiver/transceiver pin 1102. Optionally, the apparatus 1100 further includes a memory 1103.

Components of the apparatus 1100 are coupled together through a bus 1104. In addition to a data bus, the bus 1104 further includes a power bus, a control bus, and a status signal bus. However, for clarity of description, various buses in the figure are referred to as the bus 1104.

Optionally, the memory 1103 may be configured to store instructions in the foregoing method embodiments. The processor 1101 may be configured to: execute the instructions in the memory 1103, control a receive pin to receive a signal, and control a transmit pin to send a signal.

The apparatus 1100 may be the electronic device in the foregoing method embodiments, a camera module, or a chip of the electronic device.

All related content of the steps in the foregoing method embodiments may be cited in function descriptions of corresponding functional modules. Details are not described herein again.

An embodiment further provides a computer storage medium. The computer storage medium stores computer instructions. When the computer instructions are run on an electronic device, the electronic device is enabled to perform the foregoing related method steps to implement the method in the foregoing embodiments.

An embodiment further provides a computer program product. When the computer program product runs on a computer, the computer is enabled to perform the foregoing related steps to implement the method in the foregoing embodiments.

In addition, an embodiment of this application further provides an apparatus. The apparatus may be specifically a chip, a camera component (or a camera module). The apparatus may include a processor and a memory that are connected. The memory is configured to store computer-executable instructions. When the apparatus runs, the processor may execute the computer-executable instructions stored in the memory, to enable the chip to perform the methods in the foregoing method embodiments.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Based on the descriptions of the foregoing implementations, a person skilled in the art may understand that, for a purpose of convenient and brief descriptions, division into the foregoing functional modules is merely used as an example for description. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed in a plurality of different places. Some or all of the units may be selected based on actual needs to achieve the objectives of the solutions of embodiments.

**In** addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content in embodiments of this application and any content in a same embodiment may be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to conventional technologies, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

Embodiments of this application are described above with reference to the accompanying drawings. However, this application is not limited to the foregoing specific implementations, and the foregoing specific implementations are merely examples and are not restrictive. A person of ordinary skill in the art may make various variations under the teaching of this application without departing from aims and the protection scope of the claims of this application, all of which fall within the protection scope of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose computer or a dedicated computer.

Embodiments of this application are described above with reference to the accompanying drawings. However, this application is not limited to the foregoing specific implementations, and the foregoing specific implementations are merely examples and are not restrictive. A person of ordinary skill in the art may make various variations under the teaching of this application without departing from aims and the protection scope of the claims of this application, all of which fall within the protection scope of this application.

## Claims

1. An image processing method, comprising:
obtaining a first raw image captured by a camera in a first scenario;
obtaining a first image signal processor (Image Signal Processor, ISP) parameter based on the first raw image;
performing image processing on the first raw image based on the first ISP parameter, to obtain a first image;
outputting the first image to a target application, to enable the target application to perform image task processing on the first image;
obtaining a second raw image captured by the camera in a second scenario;
obtaining a second ISP parameter based on the second raw image;
performing image processing on the second raw image based on the second ISP parameter, to obtain a second image; and
outputting the second image to the target application, to enable the target application to perform image task processing on the second image.

2. The method according to claim 1, wherein image content of the first raw image is different from that of the second raw image, and/or an image attribute of the first raw image is different from that of the second raw image.

3. The method according to claim 2, wherein the first ISP parameter and the second ISP parameter are used for adjusting at least one of the following image attributes of an image:
brightness, a color, noise, sharpness, and contrast.

4. The method according to claim 2, wherein the image attributes of the first image and the second image satisfy an image task requirement of the target application.

5. The method according to claim 1, wherein the obtaining a first ISP parameter based on the first raw image comprises:
inputting the first raw image to an ISP parameter prediction model to obtain the first ISP parameter that is predicted by the ISP parameter prediction model based on the first raw image; and
the obtaining a second ISP parameter based on the second raw image comprises:
inputting the second raw image to the ISP parameter prediction model to obtain the second ISP parameter that is predicted by the ISP parameter prediction model based on the second raw image.

6. The method according to claim 5, wherein the ISP parameter prediction model runs on a neural-network processing unit NPU.

7. The method according to claim 5, wherein before the obtaining a first raw image captured by a camera in a first scenario, the method further comprises:
obtaining the ISP parameter prediction model from a cloud.

8. The method according to any one of claims 1 to 7, wherein
the performing image processing on the first raw image based on the first ISP parameter, to obtain a first image comprises:
replacing an ISP parameter currently stored in an ISP internal memory with the first ISP parameter, to enable an ISP to obtain the first ISP parameter from the ISP internal memory, and performing image processing on the first raw image based on the first ISP parameter, to output the first image; and
the performing image processing on the second raw image based on the second ISP parameter, to obtain a second image comprises:
replacing the first ISP parameter currently stored in the ISP internal memory with the second ISP parameter, to enable the ISP to obtain the second ISP parameter from the ISP internal memory, and performing image processing on the second raw image based on the second ISP parameter, to output the second image.

9. A model training method, comprising:
inputting N raw images to an image signal processor ISP parameter prediction model to obtain N ISP parameters that are output by the ISP parameter prediction model, wherein a weight of the ISP parameter prediction model is a first weight, the N ISP parameters are obtained by the ISP parameter prediction model based on the first weight, and N is an integer greater than 1;
inputting the N ISP parameters and the N raw images to a proxy model to obtain N images that are output by the proxy model;
inputting the N images to a target application to obtain an image task processing result that is output by the target application; and
if the image task processing result does not satisfy a preset condition, adjusting the weight of the ISP parameter prediction model to a second weight, and starting the procedure again from the step of inputting N raw images to an ISP parameter prediction model, until the image task processing result that is output by the target application satisfies the preset condition.

10. The method according to claim 9, wherein the preset condition comprises:
a difference value between a preset truth label of the N raw images and a truth label comprised in the image task processing result of the target application is less than a preset threshold.

11. The method according to claim 9, wherein before the inputting N raw images to an ISP parameter prediction model, the method further comprises:
inputting M raw images and M ISP parameters to an ISP to obtain M images that are output by the image processor, wherein the M raw images are in one-to-one correspondence with the M ISP parameters, and M is an integer greater than 1;
inputting the M raw images and the M ISP parameters to the proxy model to obtain M images that are output by the proxy model, wherein a current weight of the proxy model is a third weight; and
if a similarity between the M images that are output by the proxy model and the M images that are output by the image processor is less than a threshold, adjusting the weight of the proxy model to a fourth weight, and starting the procedure again from the step of inputting M raw images and M ISP parameters to an ISP, until the similarity between the M images that are output by the proxy model and the M images that are output by the image processor is greater than the threshold.

12. An image processing apparatus, comprising:
an image signal processor ISP parameter prediction module, configured to obtain a first raw image captured by a camera in a first scenario, wherein
the ISP parameter prediction module is further configured to obtain a first image signal processor ISP parameter based on the first raw image; and
an image processing ISP module, configured to perform image processing on the first raw image based on the first ISP parameter, to obtain a first image, wherein
the ISP module is further configured to output the first image to a target application, to enable the target application to perform image task processing on the first image;
the ISP parameter prediction module is further configured to obtain a second raw image captured by the camera in a second scenario;
the ISP parameter prediction module is further configured to obtain a second ISP parameter based on the second raw image;
the ISP module is further configured to perform image processing on the second raw image based on the second ISP parameter, to obtain a second image; and
the ISP module is further configured to output the second image to the target application, to enable the target application to perform image task processing on the second image.

13. The apparatus according to claim 12, wherein image content of the first raw image is different from that of the second raw image, and/or an image attribute of the first raw image is different from that of the second raw image.

14. The apparatus according to claim 13, wherein the first ISP parameter and the second ISP parameter are used for adjusting at least one of the following image attributes of an image:
brightness, a color, noise, sharpness, and contrast.

15. The apparatus according to claim 13, wherein the image attributes of the first image and the second image satisfy an image task requirement of the target application.

16. The apparatus according to any one of claims 12 to 15, wherein
the ISP parameter prediction module is configured to replace an ISP parameter currently stored in an ISP internal memory with the first ISP parameter;
the ISP module is configured to: obtain the first ISP parameter from the ISP internal memory, and perform image processing on the first raw image based on the first ISP parameter, to output the first image;
the ISP parameter prediction module is configured to replace the first ISP parameter currently stored in the ISP internal memory with the second ISP parameter; and
the ISP module is configured to: obtain the second ISP parameter from the ISP internal memory, and perform image processing on the second raw image based on the second ISP parameter, to output the second image.

17. A model training system, comprising an image signal processor ISP parameter prediction model, a proxy model, and a target application, wherein
N raw images are input to the ISP parameter prediction model to obtain N ISP parameters that are output by the ISP parameter prediction model, wherein a weight of the ISP parameter prediction model is a first weight, the N ISP parameters are obtained by the ISP parameter prediction model based on the first weight, and N is an integer greater than 1;
the N ISP parameters and the N raw images are input to the proxy model to obtain N images that are output by the proxy model;
the N images are input to the target application; and
if the N images do not satisfy an image task requirement of the target application, the weight of the ISP parameter prediction model is adjusted to a second weight, and the procedure is started again from the step of inputting N raw images to the ISP parameter prediction model, until the N images that are output by the proxy model satisfy the image task requirement of the target application.

18. The system according to claim 17, wherein the system further comprises an ISP; and
before the N raw images are input to the ISP parameter prediction model, M raw images and M ISP parameters are input to the ISP to obtain M images that are output by the image processor, wherein the M raw images are in one-to-one correspondence with the M ISP parameters, and M is an integer greater than 1;
the M raw images and the M ISP parameters are input to the proxy model to obtain M images that are output by the proxy model, wherein a current weight of the proxy model is a third weight; and
if a similarity between the M images that are output by the proxy model and the M images that are output by the image processor is less than a threshold, the weight of the proxy model is adjusted to a fourth weight, wherein the fourth weight is different from the third weight, and the procedure is started again from the step of inputting M raw images and M ISP parameters to the image processor to obtain M images that are output by the image processor, until the similarity between the M images that are output by the proxy model and the M images that are output by the image processor is greater than the threshold.

19. An electronic device, comprising:
one or more processors;
a memory; and
one or more computer programs, wherein the one or more computer programs are stored in the memory, and when the computer program is executed by the one or more processors, the electronic device is enabled to perform the method according to any one of claims 1 to 8.

20. A camera module, comprising:
one or more processors;
a memory; and
one or more computer programs, wherein the one or more computer programs are stored in the memory, and when the computer program is executed by the one or more processors, the camera module is enabled to perform the method according to any one of claims 1 to 8.

21. A chip, comprising one or more interface circuits and one or more processors, wherein the interface circuit is configured to receive a signal from a memory of an electronic device and send the signal to the processor, wherein the signal comprises computer instructions stored in the memory, and when the processor executes the computer instructions, the electronic device is enabled to perform the method according to any one of claims 1 to 8.

22. A computer storage medium, comprising computer instructions, wherein when the computer instructions are run on an electronic device, the electronic device is enabled to perform the method according to any one of claims 1 to 8.

23. A computer program product, wherein when the computer program product runs on a computer, the computer is enabled to perform the method according to any one of claims 1 to 8.
